# EUROPEAN PATENT SPECIFICATION

(11) **EP 3 472 709 B1**
(45) Date of publication and mention of the grant of the patent: **26.04.2023**
(21) Application number: 17830418.4
(22) Date of filing: 13.07.2017
(51) Int. Cl.: G06F 1/3225, G06F 1/324, G06F 12/08

(54) **APPARATUS AND METHOD FOR SETTING CLOCK SPEED OF CACHE MEMORY BASED ON MEMORY REQUEST INFORMATION**
VORRICHTUNG UND VERFAHREN ZUR EINSTELLUNG DER TAKTGESCHWINDIGKEIT EINES ZWISCHENSPEICHERS AUF DER GRUNDLAGE VON SPEICHERANFRAGEINFORMATIONEN
APPAREIL ET PROCÉDÉ DE RÉGLAGE DE LA VITESSE D'HORLOGE D'UNE MÉMOIRE CACHE SUR LA BASE D'INFORMATIONS DE REQUÊTE DE MÉMOIRE

(30) Priority: 22.07.2016 US 201615217911
(43) Date of publication of application: 24.04.2019
(73) Proprietor: Huawei Technologies Co., Ltd., Longgang District Shenzhen, Guangdong 518129 (CN)
(72) Inventor: ORAKWUE, Chukwuchebem, Shenzhen, Guangdong 518129 (CN)
(74) Representative: Gill Jennings & Every LLP
(86) International application number: PCT/CN2017/092860
(87) International publication number: WO 2018/014784

(56) References cited:
- EP-A1- 2 759 907
- CN-A- 104 951 044
- GB-A- 2 481 491
- KR-A- 20100 046 415
- US-A1- 2008 172 523
- US-A1- 2010 138 684
- US-A1- 2014 095 777
- US-A1- 2015 194 196
- US-A1- 2016 062 424

## Description

### FIELD OF THE DISCLOSURE

The present disclosure relates to cache memory, and more particularly to setting a clock speed for cache memory.

### BACKGROUND

Modern processors typically use cache memory to store data in a manner that allows for faster access to such data, thereby improving overall performance. Such cache memory is typically equipped with a dynamic voltage/frequency scaling (DVFS) capability for altering the voltage and/or clock frequency with which the cache memory operates, for power conservation purposes. To date, such DVFS capability is often limited to systems that scale the voltage/frequency in an idle mode (e.g. when memory requests are not being serviced, etc.), or simply scale the voltage/frequency strictly based on a clock of the processor, agent, etc. that is being serviced.

GB2481491 relates to memory power management via dynamic memory operation states.

US 2014/0095777 relates to system cache with fine grain power management.

### SUMMARY

The invention has been defined in the independent claims. Further specific technical features have been defined in the dependent claims.

To this end, in some optional aspects, one or more of the foregoing features of the aforementioned apparatus, system and/or method may enable clock speed control while the cache memory is active, where such control may be administered with greater precision as a result of the particular information that is identified in connection with active memory requests. This may, in turn, result in greater power savings that would otherwise be foregone in systems that lack such fine-grained clock speed control. In other aspects, performance may also be enhanced, as well. It should be noted that the aforementioned potential advantages are set forth for illustrative purposes only and should not be construed as limiting in any manner.

### BRIEF DESCRIPTION OF THE DRAWINGS

Figure 1 illustrates a method for setting a clock speed/voltage of cache memory based on memory request information, in accordance with one aspect.
Figure 2 illustrates a system for setting a clock speed/voltage of cache memory based on memory request information, in accordance with another aspect.
Figure 3 illustrates a shared cache controller for setting a clock speed/voltage of cache memory based on memory request information, in accordance with yet another aspect.
Figure 4 illustrates a sample memory request with information that may be used for setting a clock speed/voltage of cache memory, in accordance with yet another aspect.
Figure 5 illustrates a method for setting a clock speed/voltage of cache memory based on memory request information, in accordance with yet another aspect.
Figure 6 illustrates additional variations for setting a clock speed/voltage of cache memory based on memory request information, in accordance with yet another aspect.
Figure 7A illustrates an exemplary timing diagram for setting a clock speed/voltage of cache memory based on memory request information, in accordance with yet another aspect.
Figure 7B illustrates a system for setting a clock speed/voltage of cache memory based on memory request information, in accordance with one aspect.
Figure 8 illustrates a network architecture, in accordance with one possible aspect.
Figure 9 illustrates an exemplary system, in accordance with one aspect.

### DETAILED DESCRIPTION

To make the objectives, technical solutions, and advantages of this invention clearer, the following further describes various implementations in detail with reference to the accompanying drawings. The implementations described below are not all claimed, they are included to help understanding the context of the invention. While the description refers to various implementations, the embodiments of the invention are those which comprise at least all the features of an independent claim. Any implementation which does not fall within the scope of the claims does not form part of the invention, but rather included as an illustrative example that is useful for understanding the invention.

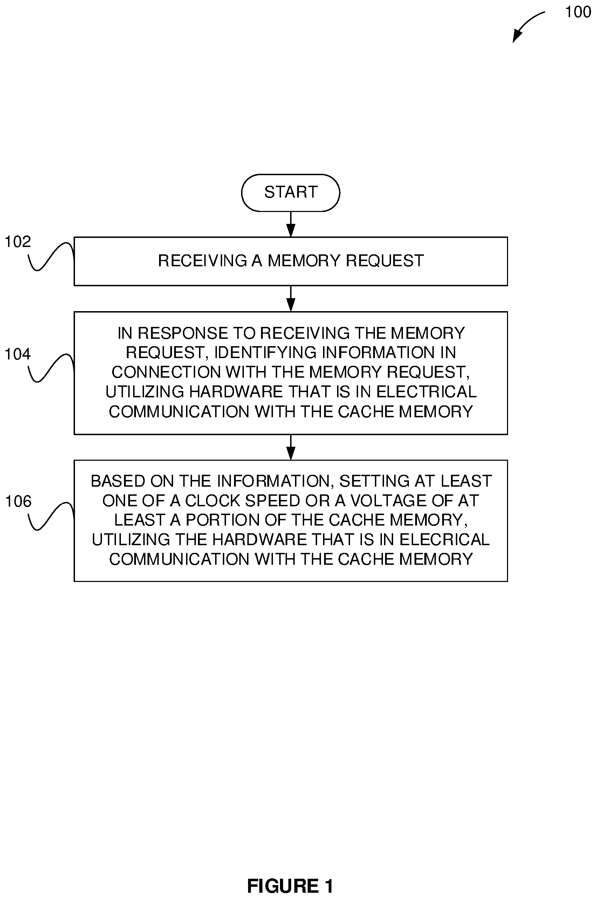

Figure 1 illustrates a method 100 for setting a clock speed/voltage of cache memory based on memory request information, in accordance with one aspect. As shown, a memory request is received in step 102. In the context of the present description, such memory request may include any request that is intended to cause an action in cache memory.

As indicated in step 104, information is identified in connection with the memory request, in response to receiving the memory request. In the present description, such information may include any information that is included in the memory request or any information derived from and/or caused to be created by content of the memory request. As shown in Figure 1, step 104 is carried out utilizing hardware that is in electrical communication with cache memory. Such hardware may include any hardware (e.g. integrated, discrete components, etc.) that is capable of identifying the information and using the same. Further, the term "electrical communication," in the context of the present description, may refer to any direct and/or indirect electrical coupling between relevant electric components. For instance, such electric components may be in electrical communication with or without intermediate components therebetween.

Also in the context of the present description, the cache memory may include any random access memory (RAM) that is capable of being accessed more quickly than other RAM in a system. For example, in one possible aspect, the cache memory may include static random access memory (SRAM) or any other type of RAM. Aspects are also contemplated where the cache memory includes a hybrid memory-type/class system.

In one aspect, the cache memory may include shared cache memory that is separate from local cache memory. In such aspect, separate instances of the local cache memory may be accessed by only one of a plurality of separate computer or processor components (e.g. clusters, cores, snooping agents, etc.), while the shared cache memory may be shared among multiple of the separate computer or processor components. It should be noted that the aforementioned processor(s) may include a general purpose processor, central processing unit, graphics processor, and/or any other type of desired processor.

In one aspect, the information may be related to at least a portion of at least one processor that caused the memory request. For example, the information may be related to a clock speed and/or a voltage of at least a portion of at least one processor that caused the memory request.

According to the claimed invention, the information includes information related to a type of the memory request (e.g. a read type, a write type, a coherence type, a prefetch type, or a flush type, etc.). In the context of the present description, a read type memory request may involve a request to read data from memory, a write type memory request may involve a request to write data to memory, a coherence type memory request may involve a request that ensures that data is consistent among multiple storage places in a system, a prefetch type memory request may involve a request that attempts to make data available to avoid a miss, and a flush type memory request may involve a request that empties at least a portion of the cache memory.

The information further includes information related to a status of data that is a subject of the memory request (e.g. a hit status, a miss status, or a hit-on-prior-miss status, etc.). In the context of the present description, a hit status may refer to a situation where a memory request for data results in the data being available for access in the cache memory, a miss status may refer to a situation where a memory request for data does not result in the data being available for access in the cache memory, a hit-on-prior-miss status may refer to a situation where a memory request for data results in the data being available for access in the cache memory after a previous memory request for the same data did not result in the data being available for access in the cache memory.

The information further includes information related to an action of the cache memory that is caused by the memory request (e.g. a read action, a write action, a request to external memory, a flush action, or a null action, etc.). In the context of the present description, the read action may refer to any action that results in data being read from the cache memory, the write action may refer to any action that results in data being written to the cache memory, the request to external memory may refer to any action where data is requested from a memory other than the cache memory, the flush action may refer to any action that results in at least some data being emptied from the cache memory, and the null action may refer to any situation where no action is taken in response to a memory request.

While the foregoing information may be identified in any desired manner, the information may, in one aspect, be identified from a field of the memory request (e.g. a requestor identification field, a type field, etc.). More details regarding the foregoing information will be set forth hereinafter in greater detail during the description of subsequent aspects.

Based on the information identified in step 104, a clock speed and/or a voltage of at least a portion of the cache memory is set in operation 106, utilizing the hardware that is in electrical communication with the cache memory. It should be noted that the one or more portions of the hardware that is utilized in connection with steps 104 and 106 may or may not be the same. Further, the hardware may or may not be integrated with the cache memory (or any other component including, but not limited to a processor, memory controller, etc.).

In one aspect, both the clock speed and the voltage may be set, while, in other aspects, only the clock speed or only the voltage may be set. For example, in one aspect, the clock speed and the voltage may include an operating point (OPP) of the cache memory. Further, the clock speed and/or the voltage may be set for a subset of the cache memory, or an entirety of the cache memory. In the case of the former, the subset of the cache memory may include at least one bank of the cache memory, or any subset thereof, for that matter.

More illustrative information will now be set forth regarding various optional architectures and uses in which the foregoing method may or may not be implemented, per the desires of the user. It should be noted that the following information is set forth for illustrative purposes and should not be construed as limiting in any manner. Any of the following features may be optionally incorporated with or without the exclusion of other features described.

For example, in some optional aspects, the method 100 may enable clock speed and/or voltage control while the cache memory is active. Such control may be administered with greater precision as a result of the information that is identified in connection with active memory requests. This may, in turn, result in greater power savings that would otherwise be foregone in systems that lack such fine-grained clock speed and/or voltage control. In other aspects, performance may also be enhanced, as well. Just by way of example, in one possible aspect, cache memory that is the subject of a high rate of snooping (to achieve cache coherence, etc.), may avoid stalls by virtue of clock speed and/or voltage control being set commensurate with the snooping device. Of course, the foregoing potential advantages are strictly optional.

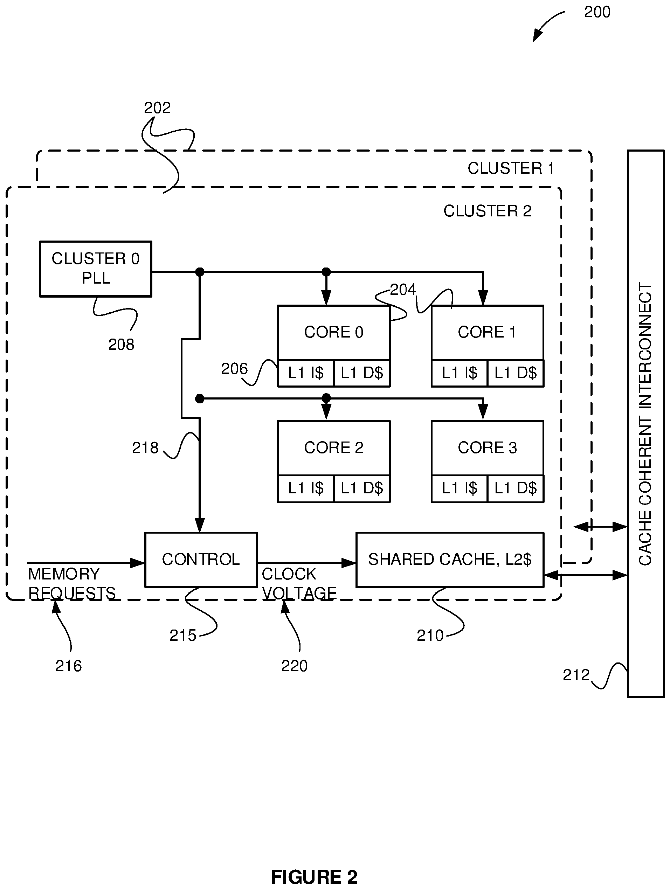

Figure 2 illustrates a system 200 for setting a clock speed/voltage of cache memory based on memory request information, in accordance with another aspect. As an option, the system 200 may be implemented in the context of any one or more of the aspects set forth in any previous and/or subsequent figure(s) and/or description thereof. However, it is to be appreciated that the system 200 may be implemented in the context of any desired environment.

As shown, the system 200 includes a plurality of clusters 202 that each include a plurality of cores 204. In use, each of the cores 204 may be independently and/or collectively assigned computing tasks which, in turn, may have various computing and storage requirements. At least a portion of such storage requirements may be serviced by local cache memory 206 that is integrated with the plurality of cores 204. Further, the cores 204 may be driven by a cluster clock 208 [e.g. phase locked loop (PLL) circuit, etc.], in the manner shown.

Further provided is a shared cache memory 210 that is in electrical communication with the cores 204 of the clusters 202 via a cache coherent interconnect 212. By this design, the shared cache memory 210 is available to the cores 204 in a manner similar to that in which the local cache memory 206 is available. Further, the cache coherent interconnect 212 may further be utilized to ensure that, to the extent that common data is stored in both the local cache memory 206 and the shared cache memory 210, such common data remains consistent.

With continuing reference to Figure 2, a shared cache controller 215 is provided that is in electrical communication with the shared cache memory 210. As further shown, the shared cache controller 215 receives, as input, memory requests 216 that are prompted by the cores 204 of the clusters 202 (and/or other sources) and may be received via any desired route (e.g. via a memory controller (not shown), directly from the cores 204, via other componentry, etc.). As further input, the shared cache controller 215 further receives one or more clock signals 218 in connection with the cores 204 and/or any other system components that are serviced by the shared cache controller 215.

In operation, the shared cache controller 215 utilizes the memory requests 216 and/or one or more clock signals 218 (and/or any information gleaned therefrom) to output at least one clock and/or voltage signal 220 to the shared cache memory 210 for the purpose of setting the clock and/or voltage at which the shared cache memory 210 operates. To this end, the shared cache memory 210 may be operated with enhanced power savings by setting the clock and/or voltage as a function of the memory requests 216 and possibly the clock signals 218. In various aspects, the level of such enhanced power savings may depend on what information is gleaned and how it is used for setting the clock and/or voltage of the shared cache memory 210. More information will now be set forth regarding one possible architecture for the shared cache controller 215.

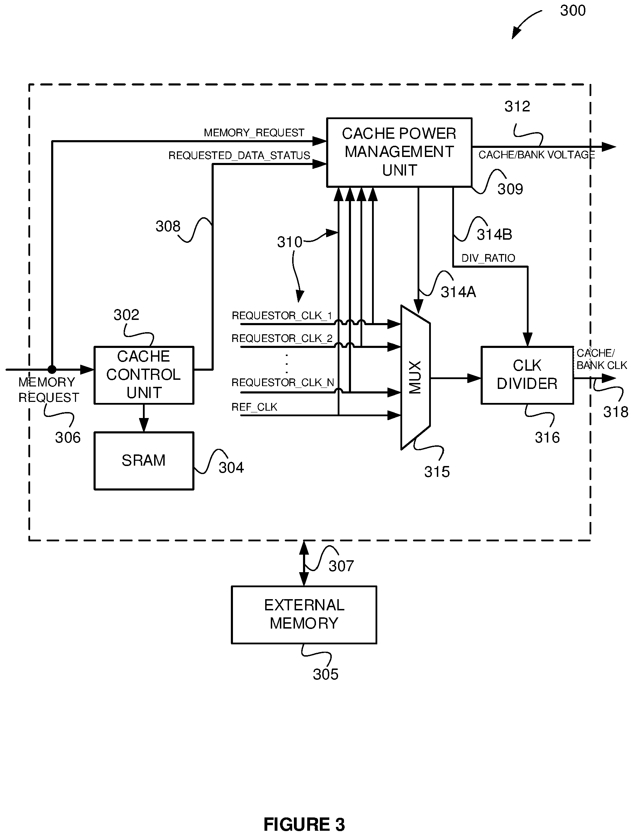

Figure 3 illustrates a shared cache controller 300 for setting a clock speed/voltage of cache memory based on memory request information, in accordance with yet another aspect. As an option, the shared cache controller 300 may be implemented in the context of any one or more of the aspects set forth in any previous and/or subsequent figure(s) and/or description thereof. For example, in one aspect, the shared cache controller 300 may include the shared cache controller 215 of Figure 2. However, it is to be appreciated that the shared cache controller 300 may be implemented in the context of any desired environment.

As illustrated, the shared cache controller 300 includes a cache control unit 302 that remains in electrical communication with SRAM 304 that operates as a cache. In use, the cache control unit 302 receives a plurality of memory requests 306 that may take on any one or more of a variety of types (e.g. a read type, a write type, a coherence type, a prefetch type, or a flush type, etc.). As will become apparent hereinafter during the description of subsequent aspects, the memory requests 306 may include a variety of fields including a data field with data to be operated upon, a type field identifying the memory request type, etc. In response to the memory requests 306, the cache control unit 302 causes one or more actions (e.g. a read action, a write action, a request to external memory, a flush action, or a null action, etc.) in connection with the SRAM 304.

As further shown, the memory requests 306 may also prompt the shared cache controller 300 to interact with (e.g. read from, write to, etc.) external memory 305 via one or more buses 307. Even still yet, the cache control unit 302 may further report data status signals 308 (e.g. a hit, a miss, or a hit-on-prior-miss, etc.) that resulted from each memory request 306. In one aspect, such data status signals 308 may be pushed without necessarily being requested while, in other aspects, the data status signals 308 may be requested by other components of the shared cache controller 300.

The shared cache controller 300 further includes a cache power management unit 309 that receives, as input, the memory requests 306, the data status signals 308, and a plurality of clock signals 310. Such clock signals 310 may include a clock signal for each of a plurality of components (e.g. computers, processors, cores, snoop agents, portions thereof, etc.) that are to be serviced by the SRAM 304 (e.g. REQUESTOR_CLK1, REQUESTOR_CLK2... REQUESTOR_CLKN, etc.). Further, a reference clock (REF_CLK) may be provided, as well.

In operation, the shared cache controller 300 serves to output voltage settings 312 for setting an operating voltage for the SRAM 304 (and/or any portion thereof), as well as internal clock settings 314A, 314B for setting an operating clock frequency for the SRAM 304 (and/or any portion thereof). Further, such voltage settings 312 and internal clock settings 314A, 314B are specifically set as a function of information gleaned, derived, and/or arising (through causation) from contents of the memory requests 306 including, but not limited to fields of the memory requests 306, the data status signals 308, and/or any other information that is collected and/or processed in connection with the memory requests 306.

As shown, in order to set the clock of the SRAM 304, the internal clock settings 314A, 314B include a clock select signal 314A that is fed to a multiplexer 315 that feeds one of clock signals 310 to a clock divider 316 which divides the clock signals 310 as a function of a divider ratio signal 314B that is provided by the cache power management unit 309. To this end, external clock settings 318 are output for setting a clock of the SRAM 304. By this design, the appropriately-selected one of the clock signals 310 (that clocks the serviced component, etc.) may be stepped down for clocking the SRAM 304.

By this design, a first module (e.g. cache control unit 302, other circuitry, etc.) is provided to, in response to receiving a memory request, identify information in connection with the memory request. Further, a second module (e.g. cache power management unit 309, other circuitry, etc.) is provided to set at least one of a clock speed or a voltage of at least a portion of the cache memory, based on the information. As mentioned earlier, such voltage/clock control may be administered with greater precision as a result of the information that is identified in connection with active memory requests. This may, in turn, result in greater power savings that would otherwise be foregone in systems that lack such intelligent, fine-grained clock speed and/or voltage control.

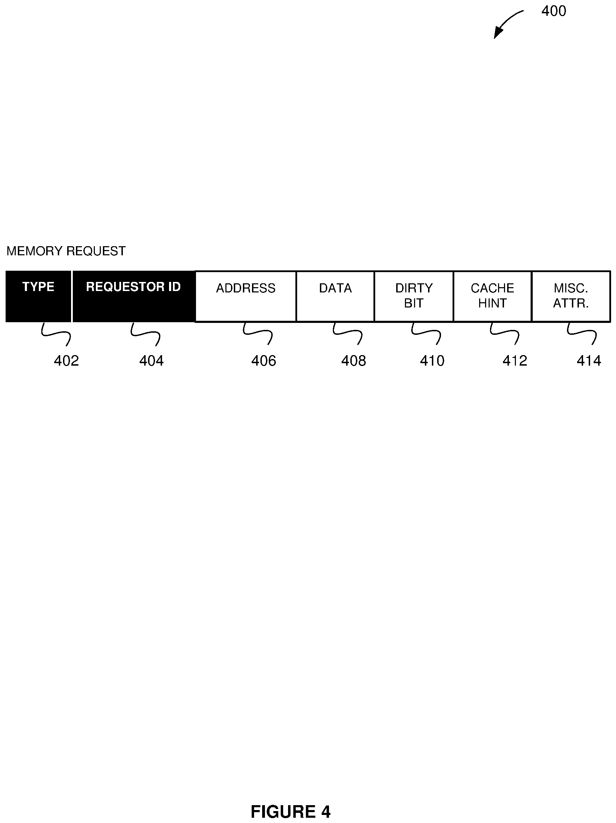

Figure 4 illustrates a sample memory request 400 with information that may be used for setting a clock speed/voltage of cache memory, in accordance with yet another aspect. As an option, the sample memory request 400 may be used in the context of any one or more of the aspects set forth in any previous and/or subsequent figure(s) and/or description thereof. For example, in one aspect, the sample memory request 400 may be received by the shared cache controller 215 of Figure 2, the shared cache controller 300 of Figure 3, etc.

As shown, the memory request 400 includes a plurality of fields including a type field 402, a requestor identifier field 404, an address field 406, a data field 408, a dirty bit field 410, a cache hint field 412, and a miscellaneous attribute(s) field 414. In use, the type field 402 may identify the type (e.g. a read type, a write type, a coherence type, a prefetch type, or a flush type, etc.) of the memory request, while the requestor identifier field 404 may identify the component (e.g. clusters, cores, snooping agent, etc.) that caused the memory request 400. This may be accomplished using any desired identifier (e.g. unique binary number, etc.). By this design, contents of the type field 402, the requestor identifier field 404, and/or any other field, for that matter, may be used for setting a clock speed/voltage of cache memory. More information will now be set forth regarding one possible method by which the memory request 400 may be used to set a clock speed/voltage of cache memory.

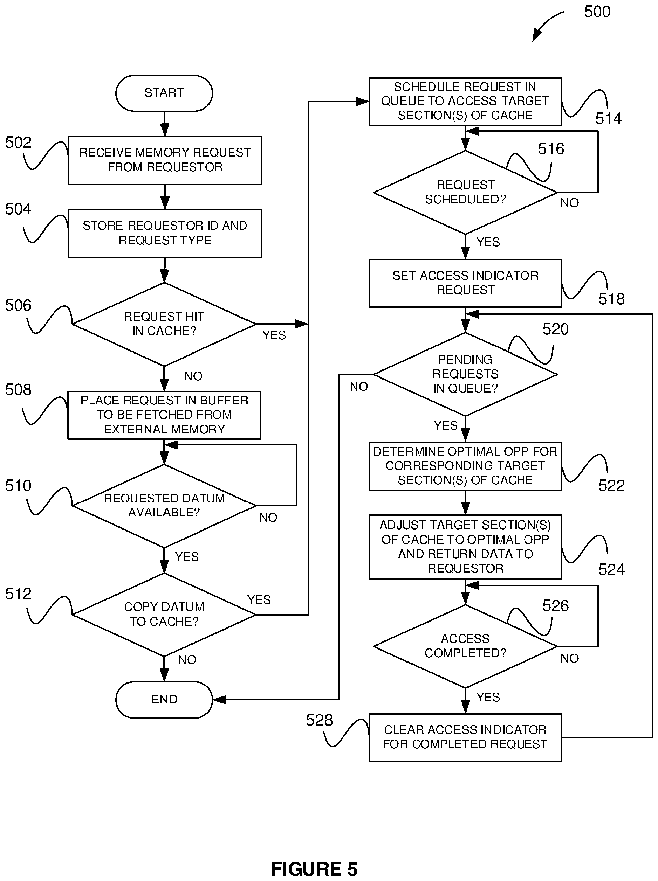

Figure 5 illustrates a method 500 for setting a clock speed/voltage of cache memory based on memory request information, in accordance with yet another aspect. As an option, the method 500 may be implemented in the context of any one or more of the aspects set forth in any previous and/or subsequent figure(s) and/or description thereof. For example, in one aspect, the method 500 may be carried out by the shared cache controller 215 of Figure 2, the shared cache controller 300 of Figure 3, etc. Further, the method 500 may operate in an environment that includes a non-blocking multi-banked cache, with write-back/write-allocate capabilities, as well as a prefetcher engine, multiple write buffers, and fill/evict queues. However, it is to be appreciated that the method 500 may be implemented in the context of any desired environment.

As shown, in step 502, a memory request is received. In various aspects, the memory request may be received by any component disclosed herein (e.g. the shared cache controller 215 of Figure 2, the shared cache controller 300 of Figure 3, etc.) or any other component, for that matter. In step 504, contents of a type field, and a requestor identifier field of the memory request (e.g. type field 402, requestor identifier field 404 of Figure 4, etc.) is stored.

It is then determined in decision 506 whether the memory request received in step 502 results in a hit (i.e. requested data is available for access, etc.). If not, the data is then requested from external memory (separate from cache memory) by placing a request in a buffer for fetching the data from the external memory. See step 508. The method 500 then polls until the requested data (e.g. datum, etc.) is available, per decision 510. It is then determined whether the data is copied to the cache memory per decision 512. It should be noted that, in some aspects, data that is requested is sent directly to the requesting component (and thus not copied to the cache memory).

Thus, if it is determined in decision 506 that the memory request results in a hit, or it is determined in decision 512 that the data is copied to the cache memory; the method 500 continues by scheduling the memory request in a queue to access the target section(s) (e.g. bank(s), etc.) of the cache memory, per step 514. The method 500 then polls until the request is scheduled per decision 516, after which an access indicator is set for the memory request in step 518. In various aspects, such access indicator may be any one or more bits that is stored with or separate from the memory request, for the purpose of indicating that the memory request (and any information contained therein/derived therefrom) is active and thus should be considered when setting the voltage/clock of the cache memory while being accessed by the relevant component(s) (or section(s) thereof) that caused the memory request.

Next, the method 500 determines in decision 520 whether there are any pending memory requests in the aforementioned queue. If not, the method 500 sits idle (and other power saving techniques may or may not be employed). On the other hand, if there are any pending memory requests in the aforementioned queue (e.g. the method 500 is active), an optimal voltage and/or clock (e.g. OPP, etc.) is determined for the corresponding target section(s) of the memory cache. See step 522.

In various aspects, such OPP may be determined in any desired manner that utilizes the memory request (and/or contents thereof or information derived/resulting therefrom) to enhance power savings while the cache memory is active. In one aspect, the optimal OPP may be determined by a cache power management unit (e.g. cache power management unit 309 of Figure 3, etc.) as being a highest (i.e. fastest, as compared to others) clock of the requestors that are currently accessing the cache memory, as indicated by access indicators of pending memory requests in the queue.

In another aspect, a minimum time quantum may be used before changing the OPP, in order to limit a frequency at which the OPP is changed. Thus, the memory requests may be buffered every cycle to change the OPP, but the change may be only made every other N cycles, where N = 1, 2, 3....X (any integer). To this end, the decision to scale the cache memory clock may be deferred, based on a context in which the cache memory is being accessed, where such context may be defined by the memory request information.

In another possible aspect, such quantum may be mandated to compensate for delays in changing the OPP based on a rate of memory requests. In still other aspects, glitch-free multiplexer designs may be used that minimize lock delays when selecting and changing the clock. Still yet, the selected cache/bank voltage of the cache memory may be different or the same as the voltage needed for the clock generator.

In any case, the target section(s) of the cache memory may be adjusted to the optimal OPP and then return the data to the requestor. See step 524. The method 500 then polls per decision 526 until the access is complete, after which the aforementioned access indicator is cleared in step 528 for the memory request that caused the access, since such memory request, at such point, has already been serviced and is no longer relevant in any subsequent calculation of the optimal OPP.

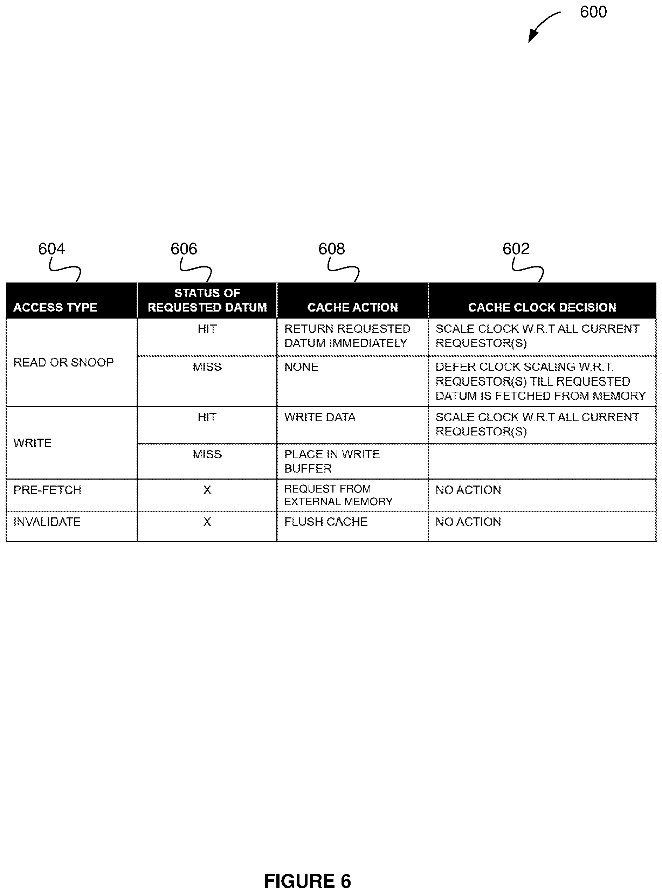

Figure 6 illustrates additional variations 600 for setting a clock speed of cache memory based on memory request information, in accordance with yet another aspect. As an option, the additional variations 600 may be implemented in the context of any one or more of the aspects set forth in any previous and/or subsequent figure(s) and/or description thereof. However, it is to be appreciated that the additional variations 600 may be implemented in the context of any desired environment.

As shown, various cache clock decisions 602 may be afforded as a function of different combinations of an access type 604, data status 606, and cache action 608. For instance, in the case of a read or snoop access type where the data status indicates a hit and the cache action is a read, the clock is scaled with respect to all current requestor(s). Further, also in the case of a read or snoop access type, but where the data status indicates a miss and the cache action is null, the clock is scaled with respect to the requestor(s) until the requested data is fetched from memory. Still yet, in the case of a write access type where the data status indicates a hit and the cache action is a write, the clock is scaled with respect to all current requestor(s). Even still, other examples are illustrated where no action is carried out to optimize the clock.

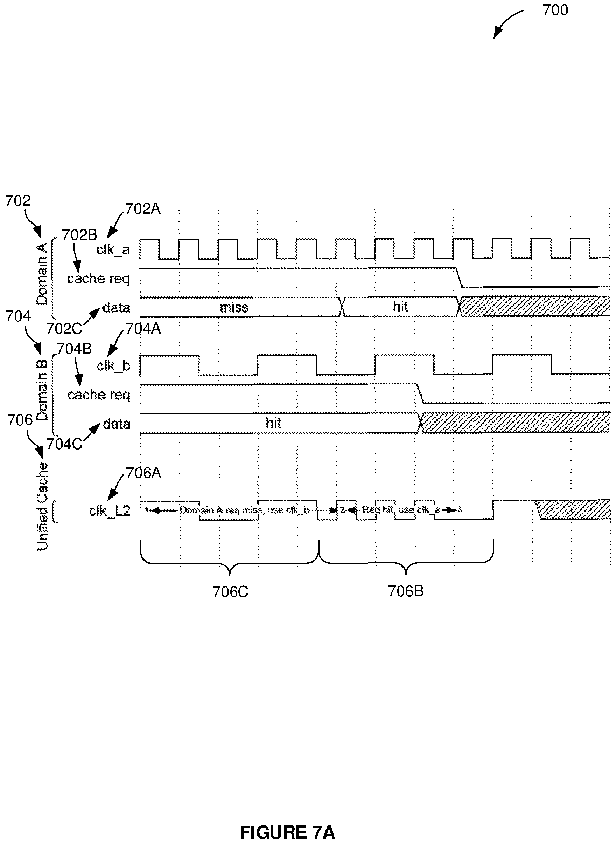

Figure 7A illustrates an exemplary timing diagram 700 for setting a clock speed/voltage of cache memory based on memory request information, in accordance with yet another aspect. As an option, the exemplary timing diagram 700 may reflect operation of any one or more of the aspects set forth in any previous and/or subsequent figure(s) and/or description thereof.

As shown, a first domain 702 (e.g. including at least one requesting component, etc.) includes a first clock 702A, and a cache request 702B that that results in a data status 702C. Further, a second domain 704 (e.g. including at least one other requesting component, etc.) includes a second clock 704A, and a cache request 704B that that results in a data status 704C. Still yet, a cache memory 706 is shown to include a third clock 706A. While two domains 702, 704 are described in the context of the present aspect, it should be noted that other aspects are contemplated with more or less of such domains.

Based on the fact that the data status 702C of the first domain 702 indicates a miss during period 706C, the second clock 704A is utilized to drive the third clock 706A of the cache memory by setting the same to the second clock 704A of the second domain 704 during such period, as shown. However, once the data status 702C indicates a hit during period 706B, the first clock 702A is utilized to drive the third clock 706A of the cache memory 706 by setting the same to the first clock 702A of the first domain 702 during such period. While the third clock 706A of the cache memory 706 is shown to switch between the two different clock rates, it should be noted that some delay may be incorporated between such transition.

Thus, the decision to scale the cache memory clock may be deferred to a later time, based on a context in which the cache memory is being accessed. By deferring any voltage/clock scaling, power savings may be afforded.

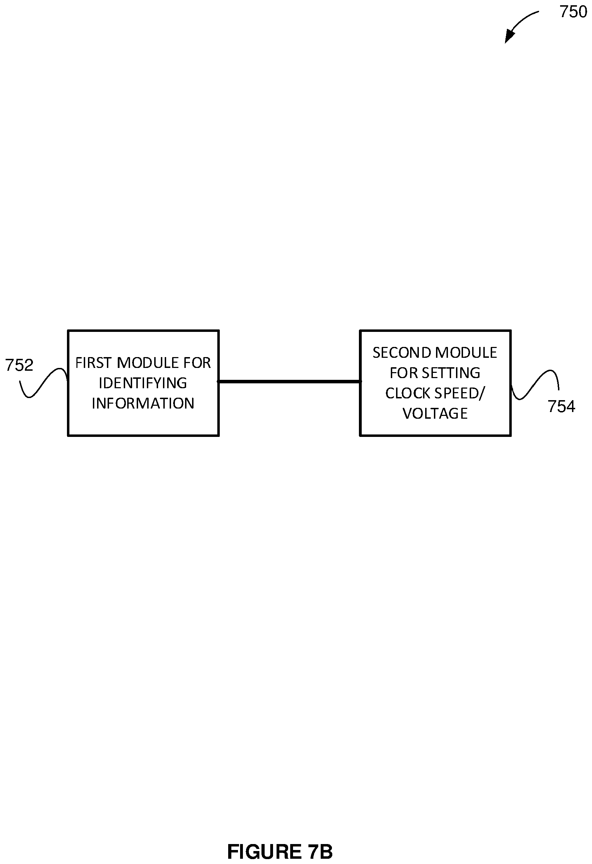

Figure 7B illustrates a system 750 for setting a clock speed/voltage of cache memory based on memory request information, in accordance with another aspect. As an option, the system 750 may be implemented in the context of any one or more of the aspects set forth in any previous and/or subsequent figure(s) and/or description thereof. However, it is to be appreciated that the system 750 may be implemented in the context of any desired environment.

As shown, the system 750 includes first means in the form of a first module 752 (e.g. first circuitry, a module performing operation 104 of Figure 1, a first portion of the controller 215 in Figure 2 such as the cache control unit 302 in Figure 3, etc.) which is configured to, in response to receiving a memory request, identify information in connection with the memory request. Also included is second means in the form of a second module 754 (e.g. second circuitry, a module performing operation 106 of Figure 1, a second portion of the controller 215 in Figure 2 such as the cache power management unit 309 and the clock divider 316 in Figure 3, etc.) in communication with the first module 752, where the second module 754 is configured to set at least one of a clock speed or a voltage of at least a portion of cache memory, based on the information. In one aspect, the system 750 may be configured to operate in accordance with the method 100 of Figure 1. For example, the system 750 may, in such aspect, include a receiving module (or means) for receiving memory requests in accordance with operation 102 of Figure 1.

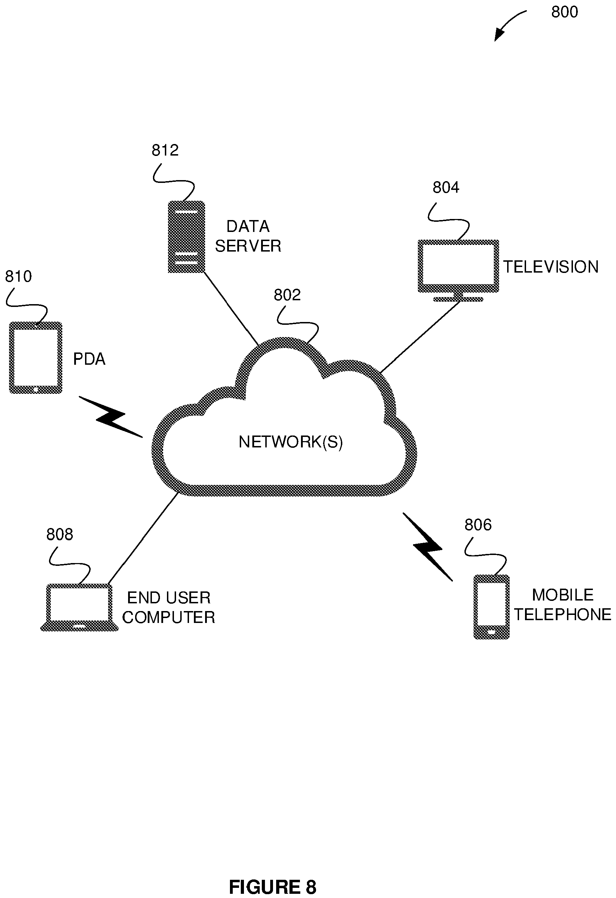

Figure 8 illustrates a network architecture 800, in accordance with one aspect. In one aspect, the aforementioned cache memory voltage/clock control of any one or more of the aspects set forth in any previous and/or subsequent figure(s) and/or description thereof, may be incorporated in any of the components shown in Figure 8.

As shown, at least one network 802 is provided. In the context of the present network architecture 800, the network 802 may take any form including, but not limited to a telecommunications network, a local area network (LAN), a wireless network, a wide area network (WAN) such as the Internet, peer-to-peer network, cable network, etc. While only one network is shown, it should be understood that two or more similar or different networks 802 may be provided.

Coupled to the network 802 is a plurality of devices. For example, a server computer 812 and an end user computer 808 may be coupled to the network 802 for communication purposes. Such end user computer 808 may include a desktop computer, lap-top computer, and/or any other type of logic. Still yet, various other devices may be coupled to the network 802 including a personal digital assistant (PDA) device 810, a mobile phone device 806, a television 804, etc.

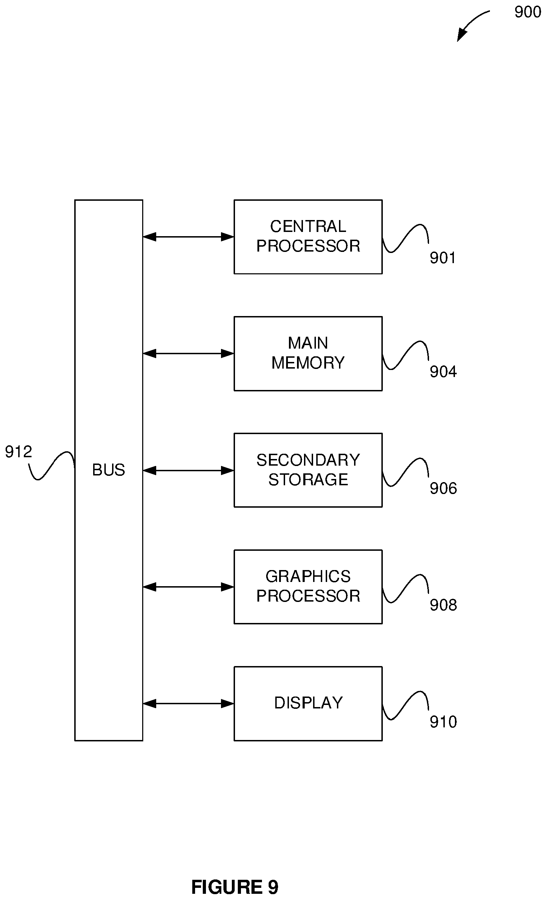

Figure 9 illustrates an exemplary system 900, in accordance with one aspect. As an option, the system 900 may be implemented in the context of any of the devices of the network architecture 800 of Figure 8. However, it is to be appreciated that the system 900 may be implemented in any desired environment.

As shown, a system 900 is provided including at least one central processor 902 which is connected to a bus 912. The system 900 also includes main memory 904 [e.g., hard disk drive, solid state drive, random access memory (RAM), etc.]. The system 900 also includes a graphics processor 908 and a display 910.

The system 900 may also include a secondary storage 906. The secondary storage 906 includes, for example, a hard disk drive and/or a removable storage drive, representing a floppy disk drive, a magnetic tape drive, a compact disk drive, etc. The removable storage drive reads from and/or writes to a removable storage unit in a well-known manner.

Computer programs, or computer control logic algorithms, may be stored in the main memory 904, the secondary storage 906, and/or any other memory, for that matter. Such computer programs, when executed, enable the system 900 to perform various functions (as set forth above, for example). Memory 904, secondary storage 906 and/or any other storage are possible examples of non-transitory computer-readable media.

It is noted that the techniques described herein, in an aspect, are embodied in executable instructions stored in a computer readable medium for use by or in connection with an instruction execution machine, apparatus, or device, such as a computer-based or processor-containing machine, apparatus, or device. It will be appreciated by those skilled in the art that for some aspects, other types of computer readable media are included which may store data that is accessible by a computer, such as magnetic cassettes, flash memory cards, digital video disks, Bernoulli cartridges, random access memory (RAM), read-only memory (ROM), and the like.

As used here, a "computer-readable medium" includes one or more of any suitable media for storing the executable instructions of a computer program such that the instruction execution machine, system, apparatus, or device may read (or fetch) the instructions from the computer readable medium and execute the instructions for carrying out the described methods. Suitable storage formats include one or more of an electronic, magnetic, optical, and electromagnetic format. A non-exhaustive list of conventional exemplary computer readable medium includes: a portable computer diskette; a RAM; a ROM; an erasable programmable read only memory (EPROM or flash memory); optical storage devices, including a portable compact disc (CD), a portable digital video disc (DVD), a high definition DVD (HD-DVD^{™}), a BLU-RAY disc; and the like.

It should be understood that the arrangement of components illustrated in the Figures described are exemplary and that other arrangements are possible. It should also be understood that the various system components (and means) defined by the claims, described below, and illustrated in the various block diagrams represent logical components in some systems configured according to the subject matter disclosed herein.

For example, one or more of these system components (and means) may be realized, in whole or in part, by at least some of the components illustrated in the arrangements illustrated in the described Figures. In addition, while at least one of these components are implemented at least partially as an electronic hardware component, and therefore constitutes a machine, the other components may be implemented in software that when included in an execution environment constitutes a machine, hardware, or a combination of software and hardware.

More particularly, at least one component defined by the claims is implemented at least partially as an electronic hardware component, such as an instruction execution machine (e.g., a processor-based or processor-containing machine) and/or as specialized circuits or circuitry (e.g., discreet logic gates interconnected to perform a specialized function). Other components may be implemented in software, hardware, or a combination of software and hardware. Moreover, some or all of these other components may be combined, some may be omitted altogether, and additional components may be added while still achieving the functionality described herein. Thus, the subject matter described herein may be embodied in many different variations, and all such variations are contemplated to be within the scope of what is claimed.

In the description above, the subject matter is described with reference to acts and symbolic representations of operations that are performed by one or more devices, unless indicated otherwise. As such, it will be understood that such acts and operations, which are at times referred to as being computer-executed, include the manipulation by the processor of data in a structured form. This manipulation transforms the data or maintains it at locations in the memory system of the computer, which reconfigures or otherwise alters the operation of the device in a manner well understood by those skilled in the art. The data is maintained at physical locations of the memory as data structures that have particular properties defined by the format of the data. However, while the subject matter is being described in the foregoing context, it is not meant to be limiting as those of skill in the art will appreciate that various of the acts and operations described hereinafter may also be implemented in hardware.

To facilitate an understanding of the subject matter described herein, many aspects are described in terms of sequences of actions. At least one of these aspects defined by the claims is performed by an electronic hardware component. For example, it will be recognized that the various actions may be performed by specialized circuits or circuitry, by program instructions being executed by one or more processors, or by a combination of both. The description herein of any sequence of actions is not intended to imply that the specific order described for performing that sequence must be followed. All methods described herein may be performed in any suitable order unless otherwise indicated herein or otherwise clearly contradicted by context.

The use of the terms "a" and "an" and "the" and similar referents in the context of describing the subject matter (particularly in the context of the following claims) are to be construed to cover both the singular and the plural, unless otherwise indicated herein or clearly contradicted by context. Recitation of ranges of values herein are merely intended to serve as a shorthand method of referring individually to each separate value falling within the range, unless otherwise indicated herein, and each separate value is incorporated into the specification as if it were individually recited herein. Furthermore, the foregoing description is for the purpose of illustration only, and not for the purpose of limitation, as the scope of protection sought is defined by the claims as set forth hereinafter together with any equivalents thereof entitled to. The use of any and all examples, or exemplary language (e.g., "such as") provided herein, is intended merely to better illustrate the subject matter and does not pose a limitation on the scope of the subject matter unless otherwise claimed. The use of the term "based on" and other like phrases indicating a condition for bringing about a result, both in the claims and in the written description, is not intended to foreclose any other conditions that bring about that result. No language in the specification should be construed as indicating any non-claimed element as essential to the practice of the disclosure as claimed.

The scope of protection shall be defined by the appended claims.

## Claims

1. A method, comprising:
receiving (102) a memory request;
in response to receiving the memory request, identifying (104) information in connection with the memory request, utilizing hardware that is in electrical communication with cache memory; and
based on the information, setting (106) a clock speed of at least a portion of the cache memory, utilizing the hardware that is in electrical communication with the cache memory;
wherein, the information includes information related to a type of the memory request, information related to a status of data that is a subject of the memory request, and information related to an action of the cache memory that is caused by the memory request;
wherein the type of the memory request includes at least one of a read type, a coherence type, a write type, a prefetch type, or a flush type;
wherein the status of the data includes at least one of a hit status, a miss status, or a hit-on-prior-miss status; and
wherein the action of the cache memory that is caused by the memory request includes at least one of a read action, a write action, a request to external memory, a flush action, or a null action;
wherein:
when the type of the memory request is the read type, the status of the data is the hit status, and the action of the cache memory is the read action, the setting (106) a clock speed of at least a portion of the cache memory, comprises: scaling the clock speeds with respect of all current memory requests;
when the type of the memory request is the read type, the status of the data is the miss status, and the action of the cache memory is the null action, the setting (106) a clock speed of at least a portion of the cache memory, comprises: scaling of the clock speeds with respect of all current memory requests is deferred till requested data is fetched from memory;
when the type of the memory request is the write type, the status of the data is the hit status, and the action of the cache memory is the write action, the setting (106) a clock speed of at least a portion of the cache memory, comprises: scaling the clock speeds with respect of all current memory requests; and
when the type of the memory request is the prefetch type, the status of the data is the hit status, the miss status or the hit-on-prior-miss status, and the action of the cache memory is the request to external memory, the setting (106) a clock speed of at least a portion of the cache memory, comprises: deciding to take no action.

2. The method of claim 1, wherein the information is identified from a field of the memory request.

3. The method of claim 2, wherein the field of the memory request includes a type field.

4. The method of claim 1, wherein the clock speed is set to a clock speed of at least a portion of at least one processor that exhibits a highest clock speed or voltage.

5. The method of claim 1, wherein the clock speed is set for a subset of the cache memory, the subset of the cache memory includes at least one bank of the cache memory.

6. The method of claim 1, wherein the clock speed is set for an entirety of the cache memory based on the information.

7. A system, comprising:
cache memory for storing data; and
hardware in electrical communication with the cache memory, the hardware configured to perform the method according to any one of claims 1 to 6.

## Patentansprüche

1. Verfahren, umfassend:
Empfangen (102) einer Speicheranfrage;
als Reaktion auf das Empfangen der Speicheranfrage Identifizieren (104) von Informationen in Verbindung mit der Speicheranfrage unter Verwendung von Hardware, die mit einem Zwischenspeicher elektrisch verbunden ist; und
auf Grundlage der Informationen Einstellen (106) einer Taktgeschwindigkeit mindestens eines Teils des Zwischenspeichers unter Verwendung der Hardware, die mit dem Zwischenspeicher elektrisch verbunden ist;
wobei die Informationen Informationen bezüglich eines Typs der Speicheranfrage, Informationen bezüglich eines Status von Daten, die Gegenstand der Speicheranfrage sind, und Informationen bezüglich einer Aktion des Zwischenspeichers, die durch die Speicheranfrage verursacht wird, beinhalten;wobei der Typ der Speicheranfrage mindestens einen aus einem Lesetyp, einem Kohärenztyp, einem Schreibtyp, einem Vorabruftyp oder einem Leerungstyp beinhaltet;
wobei der Status der Daten mindestens einen aus einem Trefferstatus, einem Fehlerstatus oder einem Treffer-auf-vorherigem-Fehler-Status beinhaltet; und
wobei die Aktion des durch die Speicheranfrage verursachten Zwischenspeichers mindestens eine aus einer Leseaktion, einer Schreibaktion, einer Anfrage an externen Speicher, einer Leerungsaktion oder einer Nullaktion beinhaltet;
wobei:
wenn der Typ der Speicheranfrage der Lesetyp ist, der Status der Daten der Trefferstatus ist und die Aktion des Zwischenspeichers die Leseaktion ist, das Einstellen (106) einer Taktgeschwindigkeit mindestens eines Teils des Zwischenspeichers Folgendes umfasst: das Skalieren der Taktgeschwindigkeiten bezüglich aller aktuellen Speicheranfragen;
wenn der Typ der Speicheranfrage der Lesetyp ist, der Status der Daten der Fehlerstatus ist und die Aktion des Zwischenspeichers die Nullaktion ist, das Einstellen (106) einer Taktgeschwindigkeit mindestens eines Teils des Zwischenspeichers umfasst: das Skalieren der Taktgeschwindigkeiten bezüglich aller aktuellen Speicheranfragen wird verschoben, bis angefragte Daten aus dem Speicher abgerufen werden;
wenn der Typ der Speicheranfrage der Schreibtyp ist, der Status der Daten der Trefferstatus ist und die Aktion des Zwischenspeichers die Schreibaktion ist, das Einstellen (106) einer Taktgeschwindigkeit mindestens eines Teils des Zwischenspeichers umfasst: Skalieren der Taktgeschwindigkeiten bezüglich aller aktuellen Speicheranfragen; undwenn der Typ der Speicheranfrage der Vorabruftyp ist, der Status der Daten der Trefferstatus, der Fehlerstatus oder der Treffer-auf-vorherigem-Fehler-Status ist, und die Aktion des Zwischenspeichers die Anfrage an externen Speicher ist, das Einstellen (106) einer Taktgeschwindigkeit mindestens eines Teils des Zwischenspeichers umfasst: Entscheiden, keine Aktion zu ergreifen.

2. Verfahren gemäß Anspruch 1, wobei die Informationen aus einem Feld der Speicheranfrage identifiziert werden.

3. Verfahren gemäß Anspruch 2, wobei das Feld der Speicheranfrage ein Typfeld beinhaltet.

4. Verfahren gemäß Anspruch 1, wobei die Taktgeschwindigkeit auf eine Taktgeschwindigkeit mindestens eines Teils des mindestens einen Prozessors eingestellt wird, der eine höchste Taktgeschwindigkeit oder Spannung aufweist.

5. Verfahren gemäß Anspruch 1, wobei die Taktgeschwindigkeit für eine Teilmenge des Zwischenspeichers eingestellt wird, wobei die Teilmenge des Zwischenspeichers mindestens eine Bank des Zwischenspeichers beinhaltet.

6. Verfahren gemäß Anspruch 1, wobei die Taktgeschwindigkeit für eine Gesamtheit des Zwischenspeichers auf der Grundlage der Informationen eingestellt wird.

7. System, umfassend:
Zwischenspeicher zum Speichern von Daten; und
Hardware in elektrischer Verbindung mit dem Zwischenspeicher, wobei die Hardware dazu konfiguriert ist, das Verfahren gemäß einem der Ansprüche 1 bis 6 durchzuführen.

## Revendications

1. Procédé comportant les étapes consistant à :
recevoir (102) une requête de mémoire ;
en réponse à la réception de la requête de mémoire, identifier (104) des informations en liaison avec la requête de mémoire, en utilisant un matériel qui est en communication électrique avec mémoire cache ; et
sur la base des informations, régler (106) une vitesse d'horloge d'au moins une partie de la mémoire cache, en utilisant le matériel qui est en communication électrique avec la mémoire cache ;
les informations comprenant des informations liées à un type de la requête de mémoire, des informations liées à un état de données qui font l'objet de la requête de mémoire, et des informations liées à une action de la mémoire cache qui est causée par la requête de mémoire ;
le type de la requête de mémoire comprenant au moins un type parmi un type de lecture, un type de cohérence, un type d'écriture, un type de préextraction, et un type de vidage ;
l'état des données comprenant au moins un état parmi un état de réponse pertinente, un état d'absence de réponse pertinente, ou un état de réponse pertinente sur absence antérieure ; et
l'action de la mémoire cache qui est causée par la requête de mémoire comprenant au moins une action parmi une action de lecture, une action d'écriture, une requête vers une mémoire externe, une action de vidage, et une action nulle ;
lorsque le type de la requête de mémoire est le type de lecture, que l'état des données est l'état de réponse pertinente, et que l'action de la mémoire cache est l'action de lecture, le réglage (106) d'une vitesse d'horloge d'au moins une partie de la mémoire cache comportant : la mise à l'échelle des vitesses d'horloge par rapport à toutes les requêtes actuelles de mémoire ;
lorsque le type de la requête de mémoire est le type de lecture, que l'état des données est l'état d'absence de réponse pertinente, et que l'action de la mémoire cache est l'action nulle, le réglage (106) d'une vitesse d'horloge d'au moins une partie de la mémoire cache comportant : le fait de différer la mise à l'échelle des vitesses d'horloge par rapport à toutes les requêtes actuelles de mémoire jusqu'à ce que des données demandées soient extraites de la mémoire ;
lorsque le type de la requête de mémoire est le type d'écriture, que l'état des données est l'état de réponse pertinente, et que l'action de la mémoire cache est l'action d'écriture, le réglage (106) d'une vitesse d'horloge d'au moins une partie de la mémoire cache comportant : la mise à l'échelle des vitesses d'horloge par rapport à toutes les requêtes actuelles de mémoire ; et
lorsque le type de la requête de mémoire est le type de préextraction, que l'état des données est l'état de réponse pertinente, l'état d'absence de réponse pertinente ou l'état de réponse pertinente sur absence antérieure, et que l'action de la mémoire cache est la requête vers une mémoire externe, le réglage (106) d'une vitesse d'horloge d'au moins une partie de la mémoire cache, comportant : le fait de décider de n'effectuer aucune action.

2. Procédé selon la revendication 1, les informations étant identifiées à partir d'un champ de la requête de mémoire.

3. Procédé selon la revendication 2, le champ de la requête de mémoire comprenant un champ de type.

4. Procédé selon la revendication 1, la vitesse d'horloge étant réglée à une vitesse d'horloge d'au moins une partie d'au moins un processeur qui présente une vitesse d'horloge ou une tension la plus élevée.

5. Procédé selon la revendication 1, la vitesse d'horloge étant réglée pour un sous-ensemble de la mémoire cache, le sous-ensemble de la mémoire cache comprenant au moins un bloc de la mémoire cache.

6. Procédé selon la revendication 1, la vitesse d'horloge étant réglée pour une totalité de la mémoire cache sur la base des informations.

7. Système comportant :
une mémoire cache servant à stocker des données ; et
un matériel en communication électrique avec la mémoire cache, le matériel étant configuré pour réaliser le procédé selon l'une quelconque des revendications 1 à 6.
